# EUROPEAN PATENT APPLICATION

(11) **EP 2 360 978 A2**
(43) Date of publication of application: **24.08.2011**
(21) Application number: 11001150.9
(22) Date of filing: 11.02.2011
(51) Int. Cl.: H04W 52/02, H04W 88/08

(54) **Method for saving power of wireless communication system**

(30) Priority: 12.02.2010 US 303728 P; 11.02.2010 US 25167
(71) Applicant: HTC Corporation, Taoyuan County 330 (TW)
(72) Inventor: Li, Chi-Fang, Taoyuan City Taoyuan County 330 (TW)
(74) Representative: Klang, Alexander H.

(57) **Abstract**

A method for saving power of a wireless communication system including turning off a first frequency bandwidth unit of a first frequency band of the wireless communication system according to a predetermined condition; wherein the first frequency band comprises a plurality of frequency bandwidth units including the first frequency bandwidth unit.

## Description

### Cross Reference To Related Applications

This application claims the benefit of U.S. Provisional Application No. 61/303,728, filed on Feb. 12, 2010 and entitled "Methods and Apparatuses for Network Energy Saving in Wireless Communication Systems", the contents of which are incorporated herein.

### Background of the Invention

### 1. Field of the Invention

The present invention relates to wireless communication systems, and more particularly, to network energy saving for wireless communication systems.

### 2. Description of the Prior Art

Conventional wireless communication systems, such as the global system for mobile communications (GSM), third generation partnership project (3GPP) universal mobile telecommunications system (UMTS)/high speed packet access (HSPA) system, 3GPP long term evolution (LTE)/LTE-Advanced system, and worldwide interoperability for microwave access (WiMAX) system, are deployed with a set of base stations in serving areas. These base stations radiate system signals to cover serving areas and usually provide service continuity with mobility throughout their serving areas. In order to provide these services, base stations consume large power to radiate system signals within nominal coverage areas all the time. However, users do not always access wireless systems for 24 hours a day. Part of power radiation from base stations is obviously wasted while only few or even no user is accessing systems.

### Summary of the Invention

The present invention provides a method for saving power of a wireless communication system. The method comprises turning off a first frequency bandwidth unit of a first frequency band of the wireless communication system according to a predetermined condition, comprising turning off the first frequency bandwidth unit within a serving area according to the predetermined condition; wherein the serving area is covered by at least one cell, and a base station is located in the cell; wherein the predetermined condition is that amount of mobile stations within the serving area is lower than a predetermined number; wherein the first frequency band comprises a plurality of frequency bandwidth units including the first frequency bandwidth unit.

The present invention further provides a method for saving power of a wireless communication system. The method comprises turning off a first radio covered space unit of the wireless communication system according to a predetermined condition; wherein a base station is located at the first radio covered space unit; wherein the predetermined condition is that no mobile station is present in the first radio covered space unit.

The present invention further provides a device for saving power of a wireless communication system. The device comprises means for turning off a first frequency bandwidth unit of a first frequency band of the wireless communication system according to a predetermined condition; wherein the first frequency band comprises a plurality of frequency bandwidth units including the first frequency bandwidth unit.

The present invention further provides a device for saving power of a wireless communication system. The device comprises means for adjusting radiation power of a base station of the wireless communication system according to a predetermined condition; wherein the predetermined condition is locations of mobile stations.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a flowchart illustrating a power-saving process for a wireless communication system on frequency domain of the present invention.
FIG. 2 is a diagram illustrating a first embodiment of the present invention.
FIG. 3 is a diagram illustrating a second embodiment of the present invention.
FIG. 4 is a diagram illustrating a third embodiment of the present invention.
FIG. 5 is a flowchart illustrating a power-saving process for a wireless communication system on space domain of the present invention.
FIG. 6 is a diagram illustrating a fourth embodiment of the present invention.
FIG. 7 is a diagram illustrating a fifth embodiment of the present invention.
FIG. 8 is a flowchart illustrating a power-saving process for a wireless communication system on space domain of the present invention.
FIG. 9 is a diagram illustrating a sixth embodiment of the present invention.

### Detailed Description

The present invention provides methods for saving network energy by turning off some cells/carriers of the wireless communication system according to various criteria. Furthermore, the present invention also provides methods for handling handovers for the wireless communication systems adopting the power-saving schemes of the present invention.

In the following description, the term "mobile station" (MS) and "base station" (BS) can be interpreted differently depending on the wireless communication system applied. For example, in LTE system, the mobile station means the user equipment and the base station means the evolved node B (eNB); in WiMAX system, the mobile station means the user computer and the base station means the access point (AP). Additionally, the term "serving area" can be interpreted as the area one BS serves, or an area that is overlapped by several cells, or, as a whole, the wireless communication system serves.

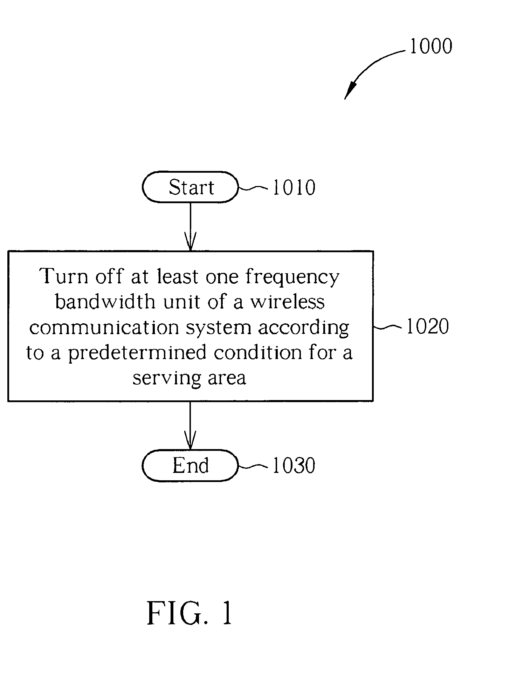

Please refer to FIG. 1. FIG. 1 is a flowchart illustrating a power-saving process 1000 for a wireless communication system on frequency domain of the present invention. The process 1000 comprises the following steps:
Step 1010: Start;
Step 1020: Turn off at least one frequency bandwidth unit of a wireless communication system according to a predetermined condition for a serving area;
Step 1030: End.

In step 1020, one frequency bandwidth unit can be interpreted as a carrier of one frequency band. For example, the frequency band is at 900 MHz, and the frequency bandwidth unit is set to be 20 MHz, so that in the frequency band of 900 MHz, a carrier can be 900 MHz and another carrier can be 920MHz. The predetermined condition can be: within the serving area of a wireless communication system/BS(s), the amount of active MS is less than a predetermined number. For example, the predetermined number is 5, and if within the serving area, the amount of the MS is 10, any of carriers of the wireless communication system is not turned off; if within the serving area, the amount of the MSs is 4, at least one of the carriers of the wireless communication system can be turned off.

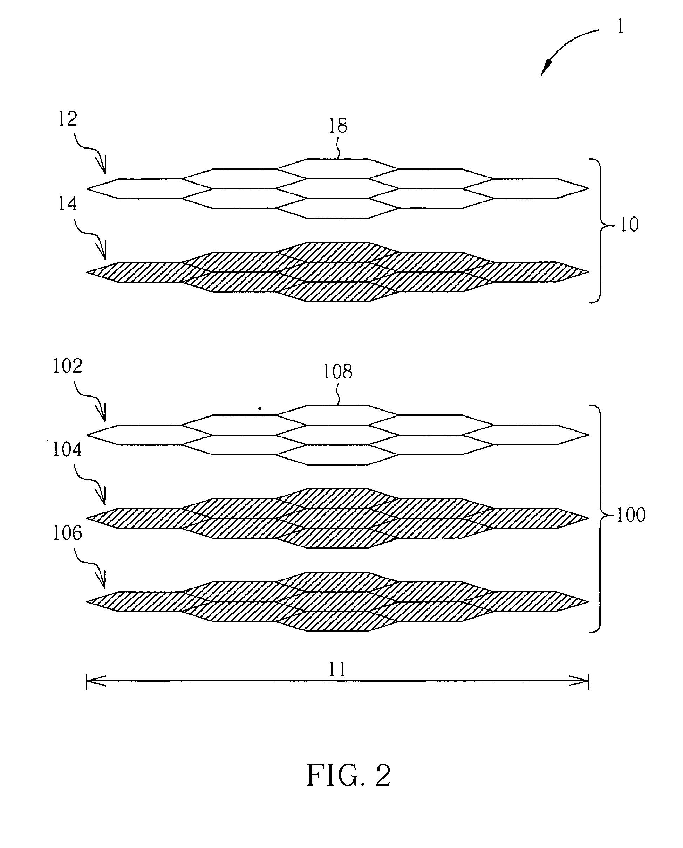

Please refer to FIG. 2. FIG. 2 is a diagram illustrating a first embodiment according to the power-saving process 1000 on frequency domain of the present invention. As shown in FIG. 2, a wireless communication system 1 deploys multiple carriers 12, 14, 102, 104, and 106 on frequency bands 10, and 100. In the frequency band 10, there are two carriers 12 and 14 used to offer system services over the serving area 11. In the frequency band 100, there are three carriers 102, 104, and 106 used to offer system services over the serving area 11. The system coverage of the carrier 12 consists of multiple cells and each cell is similar to the cell 18. It is assumed that a BS is located within a cell and the BS radiates system signals with suitable power to provide coverage of the cell, which may be the serving area 11. Coverage areas of other carriers 14, 102, 104, and 106 are also formed in similar way.

When system load of the wireless communication system 1/the BS(s) is normal or high, e.g. the amount of MSs (within the serving area 11) is higher than a predetermined number, the carriers 12, 14, 102, 104, and 106 are supposed to be turned on and provide services to MSs. When system load of the wireless communication system 1/the BS(s) is not high or whenever it is possible to handle user services by less carriers, e.g. the amount of MSs (within the serving area 11) is lower than the predetermined number, the wireless communication system 1/ the BS(s) can initiate a power-saving process such as the power-saving process 1000, and turns off at least one of the carriers. Consequently, for active and camped MSs, they can be handed over or cell re-selected on to other carriers which are kept on transmitting system signals. In other words, if an active MS is camped on a carrier and the carrier is about to be turned off by the wireless communication system 1/the BS(s), then the active MS can camp on to another carrier which will not be turned off by wireless communication system 1/the BS(s). In this way, after some carriers are empty of MSs (no MS present), transmission of system signals on these carriers can be turned off and power consumption (of the wireless communication system 1/the BS(s)) will be saved accordingly.

An extension from the first embodiment of the present invention in FIG. 2 is to keep at least one carrier turning on in each frequency band, e.g. frequency band 10 or 100, since there might be a new MS powered on and will scan on one of frequency bands 10 and 100. Keeping at least one carrier turning on in each frequency band can provide few impact to MS camp-on performance. In FIG. 2, within frequency band 10, the carrier 12 is decided to be always turned on, and thus the carrier 14 can be decided to be selectively turned off to save power according to the predetermined condition. Within frequency band 100, the carrier 102 is decided to be always turned on, and thus the carriers 104 and 106 can be decided to be selectively turned off to save power according to the predetermined condition. In both frequency bands 10 and 100, there are still at least carriers 12 and 102 respectively always kept on to serve active/idle MS and/or new camp-on MS.

Additionally, still referring to FIG. 2, the frequency bands 10 and 100 can be, for example, 450MHz, 700MHz, 900MHz, 1800MHz, or 2.0GHz, etc. The carriers 12 and 14 are carriers at around the range of the frequency band. For example in case the frequency band 10 is at 900MHz, the carrier 12 can be 900 MHz and the carrier 14 can be 920MHz. The bandwidth of both carriers can be 20MHz, or 10MHz, etc. There is no restriction to their bandwidth sizes. In FIG. 2, the number of frequency bands can be from one to any number larger than one. There can be one or multiple carries deployed in frequency bands independently. The selected carrier(s) 12 can be one or even more than one. For example, if there is a need, the carriers 102 and 104 can be further decided to be always turned on for providing services or enhancing transmission quality, and the carrier 106 can be decided to be selectively turned off for saving power according to the predetermined condition.

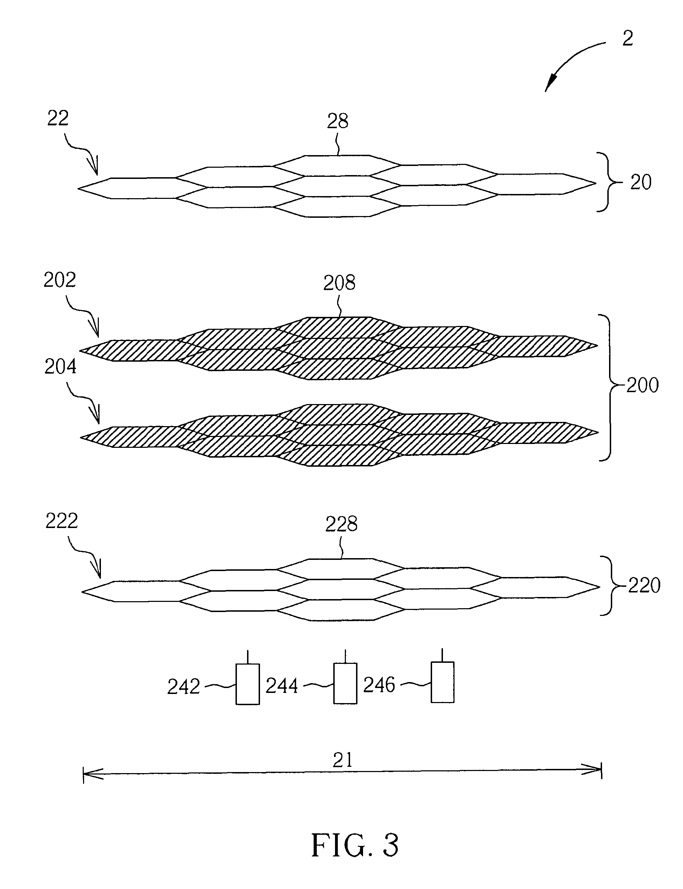

Please refer to FIG. 3. FIG. 3 is a diagram illustrating a second embodiment according to the power-saving process 1000 on frequency domain of the present invention. As shown in FIG. 3, a wireless communication system 2 deploys carriers 22, 202, 204, and 222 on frequency bands 20, 200, and 220, and there are MSs 242, 244, and 246 present in the serving area 21. In the frequency band 20, there is one carrier 22 used to offer system services over a serving area 21. In the frequency band 200, there are two carriers 202 and 204 used to offer system services over the serving area 21. In the frequency band 220, there is one carrier 222 used to offer system services over the serving area 21. The system coverage of the carrier 22 consists of multiple cells and each cell is similar to the cell 28. There is assumed a BS located within a cell and the BS radiates system signals with suitable power to provide coverage of the cell. Coverage areas of other carriers 202, 204 and 222 are also formed in a similar way.

When system load of the wireless communication system 2/the BS(s) is normal or high, e.g. the amount of MSs (within the serving area 21) is higher than a predetermined number, the carriers 22, 202, 204, and 222 are supposed to be turned on and provide services to the MSs. When system load of the wireless communication system 2/the BS(s) is not high or whenever it is possible to handle user services by less carriers, e.g. the amount of MS (within the serving area 21) is lower than the predetermined number, the wireless communication system 2/the BS(s) can initiate a power-saving process such as the power-saving process 1000 to turn off several carriers. For active and camped MSs, they can be handed over or cell re-selected on to other carriers which are kept on transmitting system signals. In other words, if an active MS is camped on a carrier and the carrier is about to be turned off by the wireless communication system 2/the BS(s), then the active MS can camp on to another carrier which will not be turned off by wireless communication system 2/the BS(s). In this way, after some carriers are empty of MSs (no MS present), transmission of system signals on these carriers can be turned off and power consumption (of the wireless communication system 2/the BS(s)) will be saved accordingly.

In the second embodiment of FIG. 3, the wireless communication system 2/the BS(s) can consider accessibilities of frequency bands of three MSs 242, 244, and 246. For example, assuming the MS 242 is capable of accessing the two frequency bands 20 and 200, the MS 244 is capable of accessing the two frequency bands 20 and 220, and the MS 246 is only capable of accessing the frequency band 220. The frequency bands 20 and 220 can be decided to be always turned on and the frequency band 200 can be decided to be turned off for power-saving, i.e. the carriers 202 and 204 will be turned off under some condition for power-saving. The MS 242 can be scheduled to camp on the frequency band 20, i.e. camping on the carrier 22. The MS 244 can be scheduled to camp on either the frequency band 20 (i.e. camping on the carrier 22) or the frequency band 220 (i.e. camping on the carrier 222). The MS 246 can be scheduled to camp on the frequency band 220, i.e. camping on the carrier 222.

An extension from the second embodiment of FIG. 3 is that if there is more than one carrier on the selected frequency bands, those carriers can be down selected again to keep only one or few carriers to provide services and turn off the others to save power.

Another set of extensions from the second embodiment of FIG. 3 is that the MSs to be considered can be extended as considering one of (1) all MSs on market; (2) all MSs registered in the wireless communication system 2; (3) only MSs are in active state with on-going communication.

Additionally, still referring to FIG. 3, the frequency bands 20, 200, and 220 can be, for example, 450MHz, 700MHz, 900MHz, 1800MHz, or 2.0GHz, etc. The carriers 22, 202, 204, and 222 are carriers at around the range of the frequency bands. For example in case the frequency band 200 is at 900MHz, the carrier 202 can be 900 MHz and the carrier 204 can be 920MHz. Bandwidths of both carriers can be 20MHz, or 10MHz, etc. There is no restriction to their bandwidth sizes. In FIG. 3, the number of frequency bands can be from one to any number larger than one. There can be one or multiple carries deployed in frequency bands independently. The selected carrier(s) 22 can be the only one or even have more than one carrier in the selected frequency band 20. Similarly, the selected carrier(s) 222 can be one or even more than one in the selected frequency band 220.

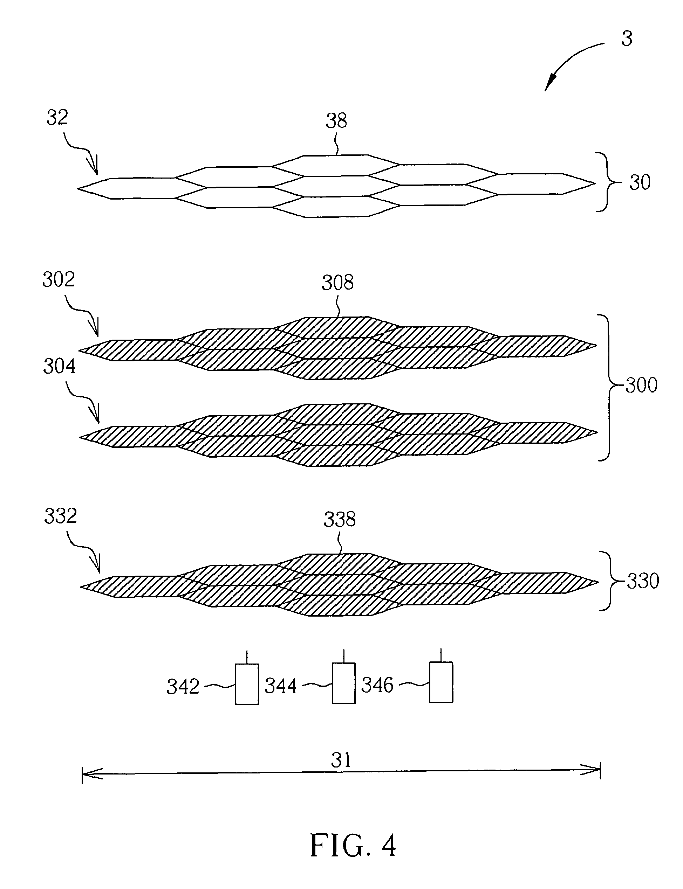

Please refer to FIG. 4. FIG. 4 is a diagram illustrating a third embodiment according to the power-saving method 1000 on frequency domain of the present invention. As shown in FIG. 4, a wireless communication system 3 deploys multiple carriers 32, 302, 304, and 332 on frequency bands 30, 300, and 330, and there are three MSs 342, 344, and 346 present in the serving area 31. In the frequency band 30, there is one carrier 32 used to offer system services over the serving area 31. In the frequency band 300, there are two carriers 302 and 304 used to offer system services over the serving area 31. In the frequency band 330, there is one carrier 332 used to offer system services over the serving area 31. The system coverage of the carrier 32 consists of multiple cells and each cell is similar to the cell 38. It is assumed that a BS is located within a cell and the BS radiates system signals with suitable power to provide coverage of the cell. Coverage areas of other carriers 302, 304, and 332 are also formed in a similar way.

When system load of the wireless communication system 3/the BS(s) is normal or high, e.g. the amount of MSs (within the serving area 31) is higher than a predetermined number, these carriers 32, 302, 304, and 332 are supposed to be turned on and provide services to the MSs. When system load of the wireless communication system 3/the BS(s) is not high or whenever it is possible to handle user services by less carriers, e.g. the amount of MSs (within the serving area 31) is lower than the predetermined number, the wireless communication system 3/the BS(s) can initiate a power-saving process such as the power-saving process 1000 to turn off several carriers. For active and camped MSs, they can be handed over cell re-selected on to other carriers which are kept on transmitting system signals. In other words, if an active MS is camped on a carrier and the carrier is about to be turned off by the wireless communication system 3/the BS(s), then the active MS can camp on to another carrier which will not be turned off by the wireless communication system 3/the BS(s). In this way, after some carriers are empty of MSs (no MS present), transmission of system signals on these carriers can be turned off and power consumption (of the wireless communication system 3/the BS(s)) will be saved accordingly.

In the third embodiment of FIG. 4, the wireless communication system 3/the BS(s) can consider accessibilities of frequency bands of three MSs 342, 344, and 346. For explanation of the third embodiment of FIG. 4, it is assumed that the MS 342 is capable of accessing the three frequency bands 30, 300, and 330, the MS 344 is capable of accessing the three frequency bands 30, 300, and 330, and the MS 346 is capable of accessing the two frequency bands 30 and 330. The frequency bands 30 and 330 are both capable of supporting the MSs 342, 344, and 346. In the third embodiment of FIG. 4, a lower frequency band is decided to be always turned on, i.e. the frequency band 30, since carriers of a lower frequency band can provide larger coverage and consume less power. The frequency band 30 is then chosen to be kept on and the frequency bands 300 and 330 are turned off, i.e. carriers 302, 304, and 332 are turned off for power-saving.

An extension from the third embodiment in FIG. 4 is that if there is more than one carrier on the selected frequency bands, those carriers can be down selected again to keep only one or few carriers to provide services and turn off the others to save power.

Another set of extensions from the third embodiment in FIG. 4 is that the MSs to be considered can be extended as considering one of (1) all MSs on market; (2) all MSs registered in the wireless communication system 3; (3) only MSs are in active state with on-going communication.

Additionally, still referring to FIG. 4, the frequency bands 30, 300, and 330 can be, for example, 450MHz, 700MHz, 900MHz, 1800MHz, or 2.0GHz, etc. The carriers 32, 302, 304, and 332 are carriers at around the range of the frequency bands. For example in case the frequency band 300 is at 900MHz, the carrier 302 can be 900 MHz, and the carrier 304 can be 920MHz. Bandwidth of both carriers can be 20MHz, or 10MHz, etc. There is no restriction to their bandwidth sizes. In FIG. 4, the number of frequency bands can be from one to any number larger than one. There can be one or multiple carries deployed in frequency bands independently. The selected carrier(s) 32 can be the only one or even have more than one carriers in the selected frequency band 30.

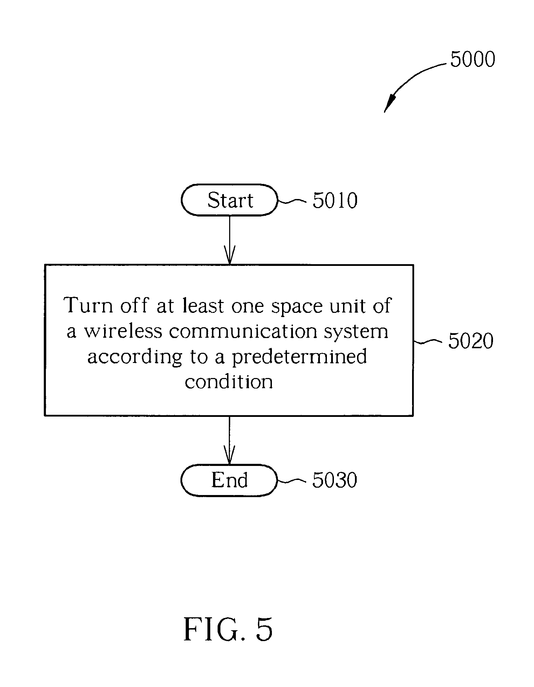

Please refer to FIG. 5. FIG. 5 is a flowchart illustrating a power-saving process 5000 for a wireless communication system on space domain of the present invention. The process 5000 comprises the following steps:
Step 5010: Start;
Step 5020: Turn off at least one radio covered space unit of a wireless communication system according to a predetermined condition;
Step 5030: End.

In step 5020, one radio covered space unit can be interpreted as a cell or a sector, depending on the wireless communication system, and the predetermined criterion can be: there is no MS present. For example, if within a cell, there is no MS present, then the cell can be turned off; on the other hand, if an MS is present in a cell, then the cell is turned back on.

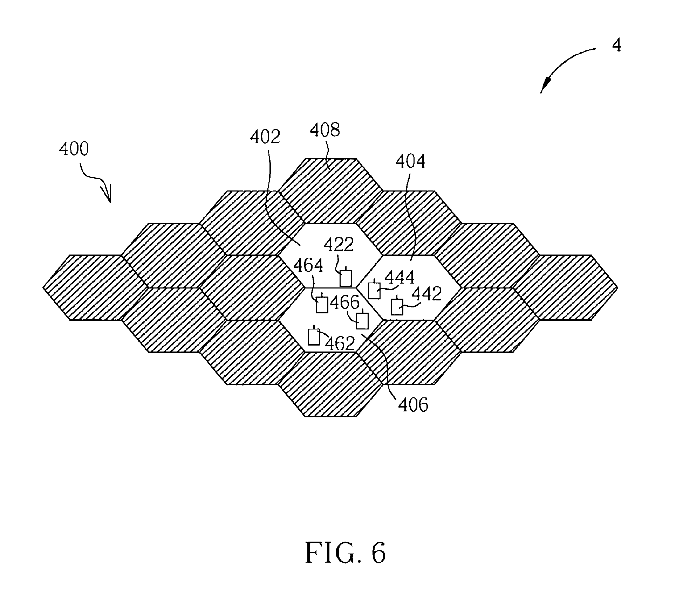

Please refer to FIG. 6. FIG. 6 is a diagram illustrating a fourth embodiment according to the power-saving process 5000 on space domain of the present invention. As shown in FIG. 6, a wireless communication system 4 deploys a carrier 400 and there are a set of cells 402, 404, 406, and 408 and lots of cells similar to the cell 408. There is one MS 422 present in the cell 402, two MSs 442 and 444 are present in the cell 404, and three MSs 462, 464, and 466 are present in the cell 406. No MS is present in the cell 408 and its similar cells.

In more detail, the fourth embodiment of FIG. 6 is to turn off power of those unused cells, e.g. the cell 408 and its similar ones, where no MS is present. For the used cells, e.g. cells 402, 404, and 406 where MSs are present, their system signals are remained transmitted for services.

An extension from the fourth embodiment of FIG. 6 is to keep on the transmission of system signals for the cells having MSs present and their neighboring cells. If an MS is present in a cell A, then the six cells surrounding the cell A will be kept turning on. This extension might provide better service continuity for the MSs, but with lower power-saving performance.

In further detail, still referring to the fourth embodiment in FIG. 6, a cell having MSs present might be clustered like three cells 402, 404, and 406 shown in FIG. 6 or randomly appear within the coverage of the wireless communication system 4. For those cells without MS present, their transmission of system signals can be turned off to save power, especially during some special period, like deep night.

Additionally, in FIG. 6, the carrier 400 can be one or more than one carrier covering the same serving area. The fourth embodiment in FIG. 6 can also be used simultaneously with previous described embodiments.

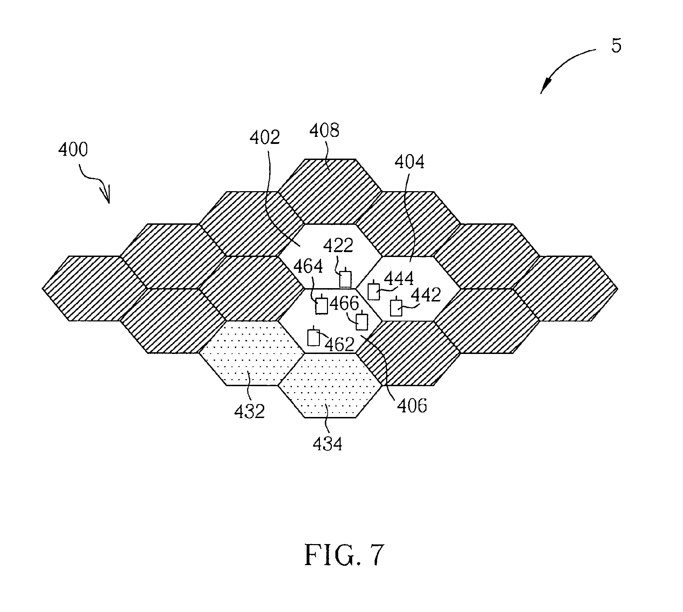

Please refer to FIG. 7. FIG. 7 is a diagram illustrating a fifth embodiment according to the power-saving process 5000 on space domain of the present invention. As shown in FIG. 7, a handover handling mechanism is introduced into the power-saving scheme of the present invention. In FIG. 7, there is shown the same system scenario as shown in FIG. 6 additionally with two cells 432 and 434 turning on. It is assumed that wireless communication system 5 adopts power-saving scheme as shown in FIG. 6, and the MS 462 is active and transmitting voice/data and is close to the boundary of the cell 406. Under such condition, in order to handle the mobility and providing seamless service continuity for the MS 462, the cells in the vicinity of the MS 462 will be turned on. For example, the cells 432 and 434 are turned on since they are candidate cells for the MS 462 to handover to. In other words, if a turned-off cell becomes a handover candidate for a served MS, the cell will be turned on accordingly.

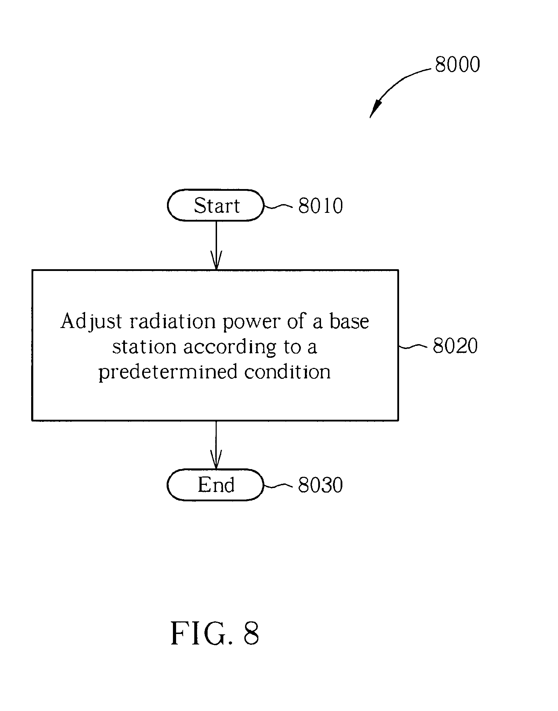

Please refer to FIG. 8. FIG. 8 is a flowchart illustrating a power-saving process 8000 for a wireless communication system on space domain of the present invention. The process 8000 comprises the following steps:
Step 8010: Start;
Step 8020: Adjust radiation power of a base station according to a predetermined condition;
Step 8030: End.

In step 8020, the radiation power of a BS is for transmitting signals to the MSs served by the BS, and the predetermined condition can be some parameters indicating information of the served MS such as locations of the served MSs or received signal strength. For example, if the MSs served by the BS are all close to the BS, then the radiation power of the BS can be reduced; if some MSs served by the BS are far from the BS, then for providing services to those MSs, the radiation power of the BS can be increased. Simply speaking, the spirit of the process 8000 is to reduce the radiation power of the BS down to a certain level that still allows the mobile stations to be able to maintain required services

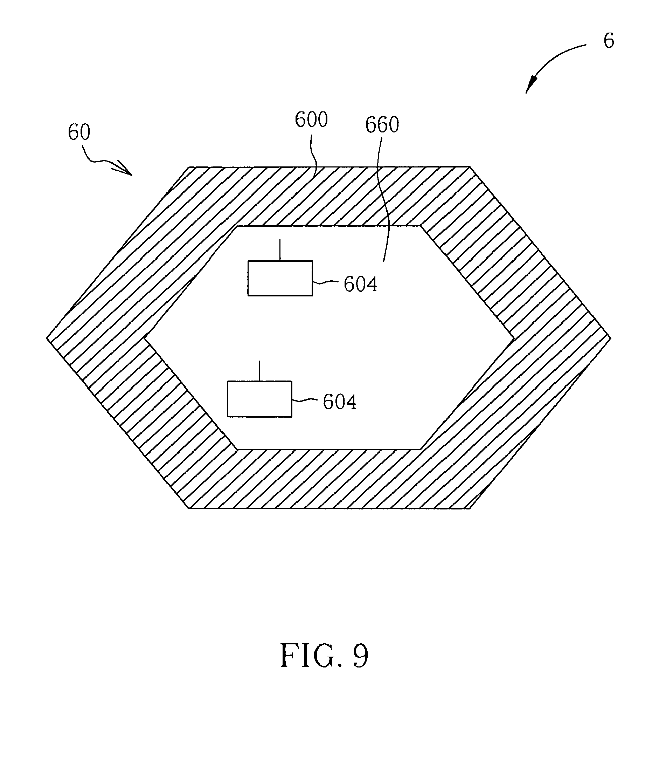

Please refer to FIG. 9. FIG. 9 is a diagram illustrating a sixth embodiment according to the power-saving process 8000 on space domain of the present invention. As shown in FIG. 9, a wireless communication system 6 deploys a carrier 60. There are supposed be lots of cells, but for simplicity only one cell 600 is drawn for explanation of the present invention. Within the cell 600, there are two MSs 602 and 604 present for the wireless communication system 6.

The sixth embodiment of FIG. 9 is to refer to the pathloss parameters and/or location based information and try to adjust the radiation power of the BS. In other words, the predetermined condition of FIG. 9 can be received signal strength or locations of mobile stations. If the pathloss and/or location parameters shows that both MSs 602 and 604 are near the BS or have chance to reduce downlink power without affecting or only minor affecting the service quality, the radiation power of the BS can be reduced to provide coverage as shown the cell 660. That is, before the radiation power of the BS is adjusted, the cell of the BS is to be the cell 600; after the radiation power of the BS is reduced, the cell 600 is shrunk and becomes the cell 660. However, since MSs 602 and 604 are still in the coverage of the cell 660, the reduction on the radiation power of the BS will not affect any transmission performance between the MSs 602 and 604 and the BS. Meanwhile, the radiation power of the BS can be saved.

In further detail, still referring to the sixth embodiment of FIG. 9, the reduced radiation power of the BS can be have multiple levels according to measurement results. Due to mobility of MSs 602 and 604, the adjustment of BS transmission power can be adjusted to insure providing good enough downlink quality for MSs 602 and 604. For example, when a MS 602 is moving toward the edge of cell 660, the BS should increase (tune back) its radiation power to increase coverage, which means the cell 660 is enlarged to be the cell 600. In this way, the service quality and continuity of the BS to the MS 602 is maintained.

Furthermore, the cell 600 can adjust its own power according to the situation inside the cell itself. Each cell in the system carrier 60 can perform similar power adjustment for power saving. While there is handover opportunity to other cells or incoming the cell, the power level of the cell can be then tuned back to its original cell planned level to provide seamless handover procedure.

To sum up, the present invention provides power-saving process for the wireless communication system, especially for the BS(s), which consumes the most power of the entire wireless communication system. By turning off some unused carriers, cells, or reducing the radiation power of the BS(s), the power consumption of the entire wireless communication system can be greatly reduced while the service quality remains the same, providing great convenience for users.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for saving power of a wireless communication system, comprising:
turning off a first frequency bandwidth unit of a first frequency band of the wireless communication system according to a predetermined condition, comprising:
turning off the first frequency bandwidth unit within a serving area according to the predetermined condition;
wherein the serving area is covered by at least one cell, and a base station is located in the cell;
wherein the predetermined condition is that amount of mobile stations within the serving area is lower than a predetermined number;
wherein the first frequency band comprises a plurality of frequency bandwidth units including the first frequency bandwidth unit.

2. The method of claim 1, further comprising:
turning off a second frequency bandwidth unit of a second frequency band of the wireless communication system according to the predetermined condition;
wherein the second frequency band comprises a plurality of frequency bandwidth units including the second frequency bandwidth unit.

3. A method for saving power of a wireless communication system, comprising:
turning off a first radio covered space unit of the wireless communication system according to a predetermined condition;
wherein a base station is located at the first radio covered space unit;
wherein the predetermined condition is that no mobile station is present in the first radio covered space unit.

4. The method of claim 3, further comprising:
turning the first radio covered space unit on when the first radio covered space unit becomes a handover candidate for a served mobile station.

5. A device for saving power of a wireless communication system, comprising:
means for turning off a first frequency bandwidth unit of a first frequency band of the wireless communication system according to a predetermined condition;
wherein the first frequency band comprises a plurality of frequency bandwidth units including the first frequency bandwidth unit.

6. The device of claim 5, wherein means for turning off the first frequency bandwidth unit of the first frequency band of the wireless communication system according to the predetermined condition comprises:
means for turning off the first frequency bandwidth unit within a serving area according to the predetermined condition;
wherein the serving area is covered by at least one cell, and a base station is located in the cell;
wherein the predetermined condition is that amount of mobile stations within the serving area is lower than a predetermined number.

7. The device of claim 6, further comprising:
means for turning off a second frequency bandwidth unit of a second frequency band of the wireless communication system according to the predetermined condition;
wherein the second frequency band comprises a plurality of frequency bandwidth units including the second frequency bandwidth unit.

8. The device of claim 7, further comprising:
means for turning off one or a plurality of the frequency bandwidth units of the second frequency band;
wherein the second frequency band is lower than the first frequency band.

9. The device of claim 7, further comprising:
means for turning off one or a plurality of the frequency bandwidth units of the first or the second frequency bands according to the mobile stations within the serving area.

10. The device of claim 9, wherein means for turning off the plurality of the frequency bandwidth units of the first or the second frequency bands according to the mobile stations within the serving area comprises:
means for when all of the mobile stations support the first frequency band, turning off the plurality of the frequency bandwidth units of the second frequency band; and
means for when all of the mobile stations support the second frequency band, turning off the plurality of the frequency bandwidth units of the first frequency band.

11. The device of claim 7, further comprising:
means for keeping at least a third frequency bandwidth unit of the plurality of the frequency bandwidth units of the first frequency band; and
keeping at least a fourth frequency bandwidth unit of the plurality of the frequency bandwidth units of the second frequency band.

12. The device of claim 5, wherein the first frequency bandwidth unit is a carrier.

13. A device for saving power of a wireless communication system, comprising:
means for adjusting radiation power of a base station of the wireless communication system according to a predetermined condition;
wherein the predetermined condition is received signal strength or locations of mobile stations.

14. The device of claim 13, wherein means for adjusting radiation power of the base station of the wireless communication according to the predetermined condition comprises:
means for reducing the radiation power of the base station when the mobile stations are close to the base station or when the mobile stations are still able to maintain required services.

15. The device of claim 14, wherein the radiation power of the base station is reduced to a certain level that allows a cell formed by the reduced radiation power covers all the mobile stations.
